(19) Europäisches Patentamt / European Patent Office / Office européen des brevets

(11) **EP 2 779 838 B1**

(12) **EUROPEAN PATENT SPECIFICATION**

(45) Date of publication and mention
of the grant of the patent:
**24.10.2018 Bulletin 2018/43**

(21) Application number: **12790765.7**

(22) Date of filing: **13.11.2012**

(51) Int Cl.:
*A23K 40/20* [(2016.01)]   *A23K 40/30* [(2016.01)]
*A23K 20/105* [(2016.01)]   *A23K 20/158* [(2016.01)]
*A23K 50/42* [(2016.01)]   *A23K 40/25* [(2016.01)]

(86) International application number:
**PCT/US2012/064740**

(87) International publication number:
**WO 2013/074466 (23.05.2013 Gazette 2013/21)**

(54) **PALATABLE PET FOODS AND METHODS FOR IMPROVING THE PALATABILITY OF PET FOODS**

WOHLSCHMECKENDE TIERNAHRUNG UND VERFAHREN ZUR VERBESSERUNG DER SCHMACKHAFTIGKEIT VON TIERNAHRUNG

ALIMENTS POUR ANIMAUX DOMESTIQUES AU GOÛT AGRÉABLE ET MÉTHODES POUR AMÉLIORER LE GOÛT DES ALIMENTS POUR ANIMAUX DOMESTIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.11.2011   US 201161559272 P**

(43) Date of publication of application:
**24.09.2014   Bulletin 2014/39**

(73) Proprietor: **IAMS Europe B.V.
7742 PB Coevorden (NL)**

(72) Inventors:
• **VILLAGRAN, Maria, Dolores Martinez-serna
Mason, Ohio 45040 (US)**
• **ALEXANDER, Jennifer
Cincinnati, Ohio 45238 (US)**
• **CILLEY, Annmarie
Mason, Ohio 45040 (US)**
• **BOEBEL, Katherine, P.
West Alexandria, Ohio 45381 (US)**
• **HAGERTY, Lee, Ann
Mason, Ohio 45040 (US)**
• **LEE, Kuo-Chung, Mark
West Chester, Ohio 45069 (US)**

(74) Representative: **Schiweck Weinzierl Koch
Patentanwälte Partnerschaft mbB
Ganghoferstraße 68 B
80339 München (DE)**

(56) References cited:
WO-A1-99/48372        WO-A1-2006/004732
WO-A1-2013/053793     WO-A2-2006/110406
US-A- 3 467 525       US-A- 4 104 407
US-A1- 2006 062 875   US-A1- 2010 303 966
US-A1- 2011 027 419

**Description**

FIELD OF THE INVENTION

The invention relates generally to a food product comprising a kibble to improve palatability, appearance, tactile properties, or combinations thereof.

BACKGROUND OF THE INVENTION

Processed foods, including pet foods, may be presented in a dry form to extend shelf-life. For example, food products having a moisture level of less than about 20% by weight of the composition may deter microbial growth that could spoil the food product. Dry foods may also be less sensitive, in some regards, to oxidation or other chemical processes that can change the taste, texture, or appearance of the food over periods of months or years prior to use.

Unfortunately, the appearance, texture, or taste of a dry food may be less than ideal even before it is stored for an extended period. Dry foods may look coarse, powdery, or dry, and therefore be unappetizing. Dry foods may be or perceived to be harder, crunchier, or denser than less dried foods, perhaps to an unacceptable degree. The lack of moisture may negatively impact mouth feel when the product is eaten, compared to wet food. A perception of grittiness or powdery mouth-feel may negatively impact taste display, even if the flavor of the food is otherwise acceptable.

Compensating mechanisms are common; however, most compensating mechanisms have their own limitations. For example, rehydration may be recommended, sometimes in the form of applying a separate liquid, sauce, or gravy, or mixing the dry food with other foods with higher moisture content. However, these steps can be messy, time-consuming, costly, or otherwise undesirable. Further, these steps assume that the separate source of moisture is readily available, affordable, and safe. For example, even rehydration with water pre-supposes a readily accessible supply of potable water.

Another approach to improving the appearance, texture, or taste of a dry food is to supplement the fat content of the food. Some fats are less likely than free moisture to harbor microbial growth, and may contribute a pleasant mouth feel and taste to the dry food. However, a high fat content may be nutritionally undesirable or unacceptable. In some cases, fat is applied to the outside surface of the food, which may provide appearance and taste improvements without adding as much fat as would be required to obtain the same benefits by mixing the fat throughout the dried food product. However, surface coatings of fat may be messy if the fat is available to transfer to other surfaces, or may create an undesirable greasy or oily feel when touched or tasted. In addition, surface coatings of fat can create additional drawbacks if they are not properly stabilized. For example, if the fat can soak into the dried food, the food may become too greasy, and may devolve to an unappetizing appearance or mouth feel. Flavor could also be diluted. In some cases, fat can drip or otherwise transfer undesirably from the product. A fat coating can also create the impression of a soft or greasy fat coating followed by the hard crunch of the dried food when it is eaten. The distinction between the coating and the dried food may be unexpected or undesirable.

These difficulties may be exacerbated when the dried food is a pet food. Many caregivers want the convenience of a dry, shelf-stable, and clean pet food, characteristics generally associated with dry foods. Caregivers may also want their pet to enjoy the food. Loud crunching noises, unfinished meals, or unappetizing appearance may lead a caregiver to believe the food is too dry, too hard, or does not taste or smell good to the pet. Even if food is rapidly consumed by a pet, caregivers may be skeptical of the quality of a food that looks or feels unappetizing to the caregiver. At the same time, compensatory mechanisms associated with pet foods, such as purchasing and mixing a separate sauce or gravy with a dried pet food, may be particularly burdensome for caregivers who have competing demands for their time and attention. For example, caregivers may want a pet food that can be quickly dispensed without added mixing steps, and that will not create a messy pet bowl that must be washed with soap and water after every feeding.

There remains a need for a dried food, particularly a dried pet food, which meets competing demands for cleanliness, taste, texture, appearance, convenience, and nutritional content.

SUMMARY OF THE INVENTION

The invention relates to a food product comprising a kibble. The kibble has a first coating. The first coating is glycerin, a plasticizer. The kibble has a second coating comprising a fat. The coated kibble has a moisture level less than 12%. The first coating is applied directly on the kibble. The second coating is applied to the first coating. The first coating and the second coating are distinct coatings. The kibble may comprise internal glycerin. The total plasticizer content of the coated kibble may be no greater than 30% by weight of the coated kibble. The total plasticizer content of the coated kibble may be no greater than 8% by weight of the coated kibble.

The food product may comprise an acid. The food product may comprise an acid in an amount greater than 0%. The food product may comprise an acid in an amount less than 3% of the coated kibble. The acid may be citric acid. The food product may not comprise any added formic acid, acetic acid, propionic acid, butyric acid, lactic acid, sorbic acid, fumaric acid, malic acid, tartaric acid, citric acid, phosphoric acid, ascorbic acid, sulfuric acid, hydrochloric acid, or combinations thereof.

The food product may comprise a structurant. The structurant may be incorporated into the second coating. The second coating may comprise at least 1% of the structurant by weight of the second coating composition. The second coating may comprise no more than 5% of the structurant by weight of the second coating composition. The second coating may comprise between 1% and 5% of the structurant by weight of the second coating composition. The second coating may not be an emulsion. The structurant may be applied as a third coating. The third coating may be applied over the second coating. The structurant may be a high melting point fat, edible wax, or emulsifier.

BRIEF DESCRIPTION OF THE DRAWINGS

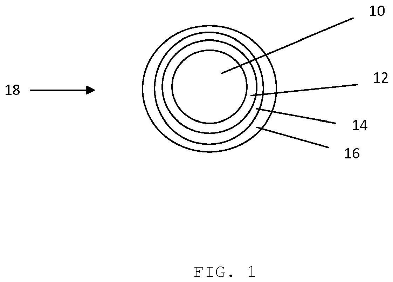

Figure 1 is a schematic, cross-sectional view of an exemplary coated food product.

DETAILED DESCRIPTION OF THE INVENTION

Figure 1 is a cross-sectional view of an exemplary food 18, with kibble 10 coated with distinct coatings 12, 14, and 16. The selection and combination of coating 12, 14, and 16 may be useful in improving the taste, texture, or appearance of food 18, which is the combined kibble 10 with two or more of coatings 12, 14, and 16.

As shown in Figure 1, the coatings 12, 14, and 16 are distinct. That is, there may be insignficant mixing of the coatings after they are applied, with distinct layers of different coatings present. By insignificant mixing, it is recognized that there will be some interaction at the interface between different coatings, but there is not commingling of the coatings such that, over time, there appears to be only one coating rather than two or more distinct coatings. Additional coatings, that is, more than three coatings, may be used. In Figure 1, kibble 10 has a round shape, however, it should be understood that the food is not limited in shape, and may have any shape or dimension desired for the product, taking into account both functional aspects of the volume and surface area of the food pieces and aesthetic considerations. Kibble 10 may be one component of a food product that comprises kibble of two or more different shapes, sizes, and/or compositions.

Kibble 10 may be a dried food, having a moisture content of less than 20%, or less than 15%, or less than 12%, or less than 9%, or less than 5% water by weight of the kibble. A low moisture content may contribute to the shelf-stability of kibble 10, in particular, the resistance of kibble 10 to microbial growth over time. Kibble 10 may comprise a plasticizer. Exemplary plasticizers include glycerin, propylene glycol, butylene glycol, polyhydric glycols such as glycerol and sorbitol, and the like, as well as some gums (such as carboxymethyl cellulose) and proteins (such as gelatin) and combinations thereof. The plasticizer may have a low water activity (Aw), for example, less than or equal to 0.35. Kibble 10 itself (e.g., internally) may comprise a plasticizer or combination of plasticizers at an amount greater than 0%, or greater than about 5%, and less than about 15%, or less than about 35%, by weight of the composition, including any coatings. For example, if kibble 10 is an extruded food product, a plasticizer may be added to the food prior to extrusion. The inclusion of a plasticizer within kibble 10 may make the kibble softer and easier to chew than a kibble of comparable moisture content with no plasticizer. For example, kibble with a plasticizer inside the kibble may have a greater softness (lower measured compressive force) than a kibble with no plasticizer inside the kibble, by a factor of 2 or even 3. In one exemplary embodiment, the kibble comprises a plasticizer at approximately 15%, by weight of the coated kibble (added internally), and is coated with the plasticizer glycerin at approximately 15%, by weight of the coated kibble (added externally), for a total plasiticizer content of approximately 30%. The kibble may be nutritionally complete and balanced. In some embodiments, the kibble may not be nutritionally complete and balanced. In such instances, the kibble may be used as a treat or supplement rather than a primary diet, or the kibble may be mixed with different particles so that the mix of kibble and other foodstuff is nutritionally complete and balanced. For example, the kibble may be mixed with nutritionally different kibble, or with fruit or vegetable pieces (such as carrot pieces, pea pieces, soy morsels, dried fruits, etc.), or with meat pieces (such as dried or preserved meats, including jerky, or otherwise prepared or preserved meats), or with tablets, capsules, or pellets comprising desired nutrients, or combinations thereof, such that the mixture is nutritionally complete and balanced.

Coating 12, is distinct from a plasticizer in kibble 10, if present, because coating 12 is applied externally to the formed kibble. That is, coating 12 is a surface coating on or near the outside of kibble 10, recognizing that some of coating 12 may migrate into kibble 10 at the interface between kibble 10 and coating 12. Coating 12 is a plasticizer in an amount greater than 0% and less than about 15%, or less than about 2%, or about 1%, by weight of the composition, including the kibble and any other coatings. Coating the plasticizer onto the kibble may provide a glossy, wet appearance that makes the food appear moist and/or lubricious, even if the total moisture content of the food is not significantly altered by coating the plasticizer onto the kibble. A small amount of plasticizer on the outside of the kibble provides a low Aw layer, which may be used to deposit actives sensitive to moisture, which may then be coated with fat to delay the rate of moisture absorption. It is expected that most kibble compositions will absorb some plasticizer at the outer surface of the kibble without penetration to the center of the kibble. Similarly, if plasticizer is mixed into the kibble, some amount of plasticizer is to be expected at the surface of the kibble, which may, depending on the amount of plasticizer and the distribution of the plasticizer within the food, make the food appear somewhat less dry. However, by delivering a plasticizer within the kibble and, separately, as a coating on the kibble, significant improvements in both softness and appearance may be achieved with the addition of a reasonable level of glycerin.

In some embodiments, the plasticizer is anhydrous. As added to or coated onto the kibble, the plasticizer may comprise less than 10% moisture, or less than 5% moisture, or less than 1% moisture. The plasticizer may have an Aw less than 0.2, or less than 0.01, or no greater than 0. Low moisture and/or low Aw plasticizers may be useful in keeping both the moisture content and the water activity of the dried food sufficiently low to prevent microbial growth. In some embodiments, the coated kibble has a water activity of 0.55 or less. The plasticizer in the kibble may be anhydrous, or the plasticizer coated on the kibble may be anhydrous, or both. The plasticizer or combination of plasticizers in the kibble may be the same as or different than the plasticizer coated onto the kibble.

Some plasticizers may alter the taste of the kibble, particularly if applied as a coating on the outside of the kibble, or if the total proportion of plasticizer in the food composition exceeds approximately 5% by weight of the composition. For example, glycerin may contribute a sweet taste to the food. For foods intended to provide a savory taste, this sweet taste may be undesirable if the ratio is not balanced properly. The inclusion of an acid, such as formic acid, acetic acid, propionic acid, butyric acid, lactic acid, sorbic acid, fumaric acid, malic acid, tartaric acid, citric acid, phosphoric acid, ascorbic acid, sulfuric acid, hydrochloric acid, or combinations thereof, may reduce an alteration in taste associated with a plasticizer. The acid may be present at an amount greater than 0% and less than about 2%, or less than about 1.5% of the composition. In some embodiments, the acid is incorporated into the plasticizer, and the plasticizer is added to the kibble as described above, that is, either added into the kibble or coated onto the kibble. In some embodiments, the acid is added to the kibble (internally or externally) separately from the plasticizer. In some embodiments, a sweet plasticizer is used without adding offsetting amounts of acid or other sour-tasting ingredients (e.g., the food is presented with a sweet taste, rather than a savory taste). Some dogs, for example, may prefer a sweet taste, or a sweet tasting plasticizer may be used with a food intended to have a sweet taste. If an acid is used, the acid may also help to preserve the product by making the product pH less hospitable to microorganisms.

A separate coating 14 is applied to coating 12. Coating 14 comprises a fat. Applying fat coating 14 over a hydrophilic coating, such as plasticizer coating 12, may reduce the absorption of fat coating 14 into kibble 10. Keeping fat coating 14 on the surface of kibble 10 may help enhance the flavor and/or mouth feel of the food at relatively lower levels of add-on fats, because a greater proportion of the fat is available at the interface between the food and the mouth when the food is consumed. Exemplary fats include poultry fat and beef tallow. Fat coating 14 may be present in an amount from about 1 to 15%, or about 6 to 8%, or about 11-13%, by weight of the total composition. A hydrophobic fat coating may help retain moisture within the food, that is, to keep the food from losing additional moisture during transportation and storage, especially in dry conditions (relative humidity less than about 35%). A heavier fat coating may be beneficial on foods comprising a plasticizer in the kibble, as compared to foods which do not comprise a plasticizer in the kibble. For example, food (such as a pet food) with a plasticizer in the kibble may have a fat coating which is about 11 to 13% of the weight of the food composition, and food with no plasticizer in the kibble may have a fat coating which is about 6 to 8% of the weight of the food composition. If the food product is a complete and nutritionally balanced pet food, it may be desirable to keep the total fat content of the food, including any fat in the kibble and the fat in all coating layers, to less than 25%, or less than 20%, of the weight of the food composition, to ensure that other nutrients are present in suitable proportions.

Fat coating 14 may comprise one or more structurants. The structurant may alter the concentration and/or crystalline order of the solids in fat coating 14. The structurant may alter other physiochemical properties, such as viscosity or density, of the fat coating. In particular, the structurant may prevent or reduce smearing of fat coating 14 as coated food 18 is processed, shipped, and used. For example, particles of food 18 may interact with each other, manufacturing equipment (including packaging equipment), packaging, serving utensils, serving dishes, hands, and the like, and a structurant may help keep fat coating 14 firm and resilient, so that the coating is not displaced or transferred away from the food during these interactions. A high melting point (greater than or equal to 140°F) fat or edible wax may serve this purpose. A fat may be preferable to an edible wax for mouth feel or taste. Fat coating 14 may comprise between 1 and 10%, or between 2 and 4%, of the structurant by weight of the fat coating composition.

The structurant may comprise a gum, such as xanthan gum or guar gum, modifications thereof, or combinations thereof.

The structurant may comprise an emulsifier. The emulsifier may provide a polar component that improves the interaction between fat coating 14 and other, hydrophilic coatings. In some embodiments, the emulsifier may contribute to the transfer of fat from the food to the mouth, and the distribution of fat within the mouth, via interactions with aqueous saliva. Thus, the emulsifier may both help retain fat coating 14 on the kibble surface, like a glaze, and improve the taste and/or mouth feel of the food when it is eaten. As such, an emulsifier may be desirable even if fat coating 14 itself (e.g., before the addition of an emulsifier) is not an emulsion. The emulsifier may be present in an amount between 1 and 10%, or between 2 and 5%, by weight of the fat coating composition. In some embodiments, an emulsifier is applied over the fat coating. When applied as a separate coating or separate coating layer, the emulsifier may be present in an amount between 0.1% and 5%, or between 1 and 3%, by weight of the fat coating composition.

Any edible emulsifier may be used, for example, lecithins, polyglycerol esters, or combinations thereof. Some compounds, such as high melting temperature 60-82°C (140-180°F) mono- and/or di-glycerides may provide structural benefits and provide a polar component to fat coating 14. Such structurants may also increase the total melting point of the fat system (fat + structurant), depending on the level of the structurant in the fat system. Suitable mixes of glycerides are commercially available under the tradename Trancendim®, from Caravan Ingredients of Lenexa, KS, USA. A suitable mix of glycerides, for example, is Trancendim® 180 or Trancendim® 130. The structurant may be present at between 0.1% and 10% by weight of the fat coating composition. The structurant may be blended into the fat coating, such that there is a single coating of a composition comprising a fat and a structurant. In some embodiments, the structurant may be applied separately as an overlay coating on the fat coating.

An additional coating or coatings 16 may be applied. Coating 16 may comprise dry or liquid additives. If fat coating 14 comprises an emulsifier, the emulsifier may enable the layering of liquid additives. The liquid additives may remain associated with fat coating 14 because of the emulsifier, but remain at the surface of fat coating 14 because of the incompatibility of the liquid additive (mostly hydrophilic) and the fat (mostly hydrophobic). This may be particularly, but not exclusively, helpful with liquid palatants, since it is most efficient to apply palatants on the outermost coating of the food so they are readily available to taste receptors in the mouth when the food is eaten. Since a liquid additive applied over fat coating 14 will be attracted to the surface but disinclined to pass through or mix with fat coating 14, the liquid additive should be more available at the surface of the food. Dry additives, including dry palatants or other dry ingredients, may be applied over fat coating 14 or over a liquid additive applied over fat coating 14. Generally, dry additives will acceptably adhere to either a fat-moistened or liquid-moistened surface. Of course, some specific dry additives will have chemical properties which make it most advantageous to apply them directly to fat coating 14 or after a layer of liquid additives applied over fat coating 14, or even to apply the dry additives as part of fat coating 14 or in the form of a liquid additive (as by dissolving or mixing the dry additive in water before applying it to the food). The ratio, by weight, of fat to a liquid additive may, in some embodiments, be between 0.3 and 8. Other ratios are feasible.

Coating 16 may comprise emulsifiers to lower the surface energy of the coated kibble, and reduce or prevent the particles from sticking together, such that the particles can be freely dispensed and easily eaten as distinct pieces. Of course, it may sometimes be desirable for the kibble to clump, as if forming a snack bar or treat from the coated kibble. Generally, if multiple coatings are applied over fat coating 14, it is desirable to place palatants on the outermost coating so they are most accessible to taste receptors in the mouth. Alternately, the palatants may be included in an inner layer at higher concentrations.

Softness can be measured using the test method described below. Softness may be helpful in that the process of masticating softer food may stimulate salivation more than masticating crunchy food, which may help transfer fat and palatants from the food to taste receptors in the mouth, and, therefore, improve the palatability of the food.

A coated kibble as disclosed may present a moist, lubricious, "meaty"-looking dried food product. The meat-like appearance may be enhanced by adding texture. Texture may be added using extrusion dies, molds, or mechanical surface modification of the kibble before or after the coating is applied. In some embodiments, the kibble is textured before coating so as not to disrupt the coating after it is applied. The meat-like appearance may be enhanced by adding color. Artificial colorants may be used, such as FD&C Red Dye #40, as well as inorganic colorants such as iron oxide, or biologically-derived colorants, such as cochineal, carmine, or carminic acid. Alternately, incorporation of red meats or red meat by-products, blood meal, or other red to dark-brown food ingredients may alter the color of the kibble and make the kibble more meat-like in appearance without the addition of additives used only for coloration. The meat-like appearance may be enhanced by modifying the softness of the food ("crunchy" texture not generally being associated with meat). The softness of the food may be modified using additional coating or coatings, or by adding glycerin in the kibble, or both, as disclosed. These approaches do not preclude the use of other additives or techniques for enhancing the softness (or "chewiness") of the food. The meat-like appearance may further be enhanced by juxtaposition with "regular" kibble that has not been colored and/or coated as disclosed herein. That is, a food composition as disclosed herein may be mixed with conventional kibble for added effect.

Coatings may alter the texture (mouth feel and moistness perception) of a food. The texture can be measured by measuring the force required to crush the kibble. The force required to crush the kibble simulates chewing. In the case of kibbles that contain no glycerin added internally in the kibble, and covered with only fat containing an emulsifier, not part of the invention, the kibbles may be lubricious with a crispy texture, and may have a softness value from 4 to 12 kgf, or from 3 to 9 kgf, or from 3.5 to 5.5 kgf. Kibble with a soft texture may contain glycerin internally in the kibble up to 15%, and the texture can be measured as softness or chewiness, as described in the Food Softness Test, below. Soft kibbles may have a softness from 1 to about 9 kgf, or from 3 - 8 kgf, or from 3 - 7 kgf. The texture of the hard kibble can also be characterized with the Young's modulus (kgf/cm2) of the kibble (force per area of kibble). For hard kibbles the maximum pressure may be from 12 to 35 kgf/cm2, or from 12 to 20kgf/cm2. Soft kibbles may show a Young's Modulus of 1 to 15 kgf/cm2, or 2 to 7 kf/cm2m, or 2.5 to 5 kgf/cm2. Kibbles with different textures and/or coatings can be blended in any desired ratio to provide texture variety for the pet.

One possible advantage of two or more coatings as disclosed is to increase the amount of fat that stays on the surface of the kibble. The level of fat on the surface may be above 25% of the total level of fat deposited as coating. For example, if 10% of fat was added on top of the surface of the kibble, the desired level of surface fat may be at least 2.5%, or even 5% or more, with the remainder of the fat soaking into the kibble or other coating layers or both.

The food product can be any suitable composition that is ingestible by a human or an animal and that provides nutritional value to the human or animal. A pet food generally will be a basal food composition having a nutritionally balanced mixture of proteinaceous and farinaceous ingredients. The food product can be baked, extruded, pelleted, or formed. Such forms of food products, and methods for their production, are well known to those of skill in the art of food manufacturing. Extrusion and extrusion cooking, for example, are described on pages 794-800 of the Encyclopedia of Food Science and Technology, Volume 2 (Y.H. Hui, ed., John Wiley & Sons, Inc. 1992).

Generally, aside from nutritional balancing additives included in these products, such as vitamins and minerals, or other additives, such as preservatives and emulsifiers and the like, a pet food for the most part will consist of ingredients which may be described as substantially proteinaceous or substantially farinaceous. Although the following should not be considered limiting, a proteinaceous ingredient can generally be defined as any material having a protein content of at least about 15% by weight, whereas a farinaceous material has a protein content substantially below this and has a major fraction of starchy or carbohydrate containing materials.

Examples of proteinaceous materials which are typically used in commercial pet foods include vegetable protein meals, such as soybean, cottenseed, or peanut meals, animal proteins such as casein, albumin, whey, including dried whey, and meat tissue including fresh meat as well as rendered or dried "meals" such as fish meal, poultry meal, meat meal, meat and bone meal, enzymatically-treated protein hydrolysates, and the like. Other types of proteinaceous materials include microbial protein such as yeast, and other types of protein, including materials such as wheat gluten or corn gluten. Yeasts may also add flavor; wheat or corn gluten may also act as texturizing agents and can be used to increase product porosity.

Examples of typical farinaceous materials include enzymatic farinaceous materials, grains such as corn, maize, wheat, sorghum, barley, and various other grains which are relatively low in protein. Numerous other materials could be added to a pet food which do not necessarily fall into either category (proteinaceous or farinaceous), including carbohydrates and legumes, such as alfalfa or soy.

A pet food is not limited to a particular composition. A pet food may be a nutritionally complete and balanced animal diet which provides all essential nutrients to sustain life (with the exception of water). Nutritionally complete and balanced pet food products may meet consensus nutrient profiles, such as AAFCO standards for dog or cat food. A pet food may be a treat or supplement that is not nutritionally balanced, but may provide some nutritive value (e.g., calories). A pet food can be any suitable form, such as bite-size or pellet form of any shape.

The term "fat" refers to any edible grade fat or lipid, including fats of avian, animal, plant, or manufactured origin, including, but not limited to, crude or refined fats. Typical animal origin fats include, for example, animal tallow, choice white grease, lard, milk-derived fats such as butter oil, and fat typically contained in cheese. Typical fats of vegetable origin include coconut oil, soybean oil, and corn oil. Typical fats of avian origin include fats derived from the tissue of chickens, turkeys, ducks, and geese, for example.

Dry additives refer to any additives that comprise less than 40% of a polar solvent (such as water) by weight of the dry additive at the time it is applied to a food. Exemplary additives that may be provided in dry form include various flavors, such as meat and cheese flavorings; meat solids and dry animal digest; herbs; dry palatants; hydrolyzed (by chemical or enzyme) vegetable proteins; minerals; pre-biotics; pro-biotics; encapsulated compounds; nutrients; pharmaceutical or homeopathic compounds; colorants; and combinations thereof. Other examples of dry additives include Bakery yeast or Brewer's yeast, which comprise dried pulverized cells of a yeast of the genus *Saccharomyces* (usually *S. cerevisiae),* often used in brewing, Torula yeast, and various yeast extracts. A variety of yeasts and yeast extracts are known to be useful as palatants, pre-biotics, or pro-biotics, and other edible microbes, living or dead, or microbial extracts may be desirable for the same or other purposes.

Liquid additives refer to any additives that comprise at least 40%, or at least 50%, or at least 60%, or up to 90% of a polar solvent (such as water) by weight of the liquid additive composition. Liquid additives include dry additives which have been dissolved, suspended, or submersed in a polar solvent prior to application to a food. Exemplary palatants that may be provided in liquid form include digests of animal origin; vitamins; amino acids; proteins or protein hydrolysates, including proteins or protein hydrolysates of vegetable origin, proteins or protein hydrolysates of animal origin, and synthetic proteins; other nutrients; yeast suspensions; flavor compositions; acidulents; dye compositions; broths; antioxidants; and combinations thereof.

Example #1

A particular embodiment of the present invention is illustrated by the following non-limiting example. An extruded pet food with a crispy texture and improved mouth feel was made. The dry ingredients were blended in batches of 1000 kg using a Hobbart® blender to achieve reasonable homogeneity in the blend prior to processing. Glycerin was used as a plasticizer and was pumped directly into the barrel of the extruder, where it is incorporated into the dough. The level of glycerin added internally to the kibble was 9%. The blend of ingredients were transferred to a pre-conditioner cylinder, where the materials were mixed with sufficient steam/water to partially gelatinize starches and soften and hydrate all ingredients. The hydrated blend of ingredients was then extruded with a single screw extruder, with a barrel temperature ranging from 93 to 138°C (200°F to 280°F) across the different extruder barrel zones (1-15). The diameter of the die used to make this product was 0.71 cm (0.28"). Extrudates were dried to a final moisture content from 7.5 to 8.5% and the Aw was approximately 0.45. The extrudates resulted in a mean product hardness (maximum compression load - kgf) of 5.53 and a product chewiness (Modulus - kgf/ cm2) of 6.8. The bulk density of the extrudates prior to the application of the coatings was 350 g/lt.

After drying, the extrudates were spray-coated with a layer of glycerin (Chemical Division, P&G, Cincinnati, OH, USA) at 38 - 49°C (100°F - 120°F) to obtain a concentration of external glycerin of 10-12% by weight of the composition. The glycerin used was 99.7% glycerin, mc =0.3%, specific gravity (at 25°C) = 1.261g/min, % glyceron on anhydrous bases = 99-101. This coating of glycerin was absorbed immediately by the extrudate. After the extrudate was coated with glycerin, a second layer comprising a fat system containing a structurant material was applied on the surface of the glycerin coated extrudate. The fat system used was a blend of 49% chicken fat, 49% beef tallow, and 2% of a structurant (Trancendim® 180) having a melting temperature between 56°C and 68°C, and comprising a ratio of monoglycerides to diglycerides of from about 5:1 to about 25:1 (average ratio approximately 12:1).

Example #2

Kibble of Example 1 may be further coated with a standard palatant blend.

Example #3 (the first two tests are not part of the invention)

A split-plate palatability test was conducted with 14 dogs. The products were a commercial dry dog food (control) and a blend of "hard" dog food (no internal plasticizer) coated with a fat containing an emulsifier with "soft" dog food (containing internal plasticizer) coated with a fat comprising an emulsifier. The plasticizer used was glycerin. The control had a % converted intake median of 20; the test product had a % converted intake median of 80. The p-value for this difference was 0.0559.

A second split-plate palatability test was conducted with 12 dogs. The products were a commercial dry dog food (control) and a dry dog food coated with a fat comprising an emulsifier. The control had a % converted intake median of 23.5%. The test product had a % converted intake median of 76.5%. The p-value for this difference was 0.1558.

These results were consistent with a separate in-home feeding test, in which 29 dog caregivers were asked to observe their dog eating different foods on sequential days, and rate each food for attributes such as "Taste Dog Enjoys," "Overall Aroma," and "Overall Texture," on a scale from -4 (Disliked Extremely) to +4 (Liked Extremely). Scores for a standard commercial diet were routinely lower than scores for a dry diet coated with a fat containing an emulsifier, which were still lower than scores for a blend of dry diet with dry diet coated with glycerin and a fat containing an emulsifier.

Example #4 (not part of the invention)

A pet food is comprised of two different type of kibbles; "hard" kibble (no internal plasticizer) and soft kibble (containing an internal plasticizer) to provide variety of texture and flavor to the pet. The following table describes differences in characteristics of the kibble.

| Attribute | Hard Kibble | Soft Kibble |
|---|---|---|
| Hardness (Kgf) | 7.5 - 10 | NA |
| Chewiness (Kgf) | NA | 2.0 - 4 |
| Maximum Pressure (Kgf/cm2) | 28.0 - 32.4 | 1.8 - 3.2 |
| Aw | 0.2 - 0.55 | 0.2 - 0.35 |
| Density (g/Lt Dry Bulk) before coating | 280 -320 | 300 - 320 |
| Density (g/L Dry Bulk) after coating | 340 - 370 | 360 - 410 |
| Moisture Content (%) | 6 - 8.3 | 11 - 13.4 |

(continued)

| Attribute | Hard Kibble | Soft Kibble |
|---|---|---|
| Surface Fat (% of total fat) | >30 | >40 |
| Total Fat (%) | 15.5 | 18 |

The kibbles can be blended to a mix of 0 - 100% of hard and 0-100% soft kibbles. For example, a blend of 50% hard and 50% soft kibbles may be prepared.

Food Softness Test

The food softness test is a compressive strain test. Using a calibrated Instron compression tester (or equivalent) with a 1KN load cell and plate/anvil set-up, place a piece of kibble as flat as possible at the point of testing (this will vary depending on the kibble shape being tested). The anvil is a cylindrical, flat-bottomed test fixture and must be larger in diameter than the kibble being tested. Set up the tester to compress the kibble to 33.33% of its original height. Repeat for at least 25 kibble pieces for each type of kibble tested. Sweep away any debris or residue between samples. Report the maximum load (kgf) pressure (maximum observed load / kibble surface area) and Young's Modulus (using the automatic calculation in Instron's Bluehill software or equivalent method). The mean maximum pressure and mean Young's Modulus are reported for each set of 25 samples. If using an Instron compression tester, the following parameters are used:

- Test Parameters

  ◦ Test rate = 6.35 mm/min
  ◦ Control mode = compressive extension
  ◦ End of test value 1 = 33% compressive strain

- Compression testing results are reported as maximum load (kgf), which may be described differently for hard and soft kibbles. For hard kibbles, the results may be referred to as Hardness, and for soft kibbles, the results may be referred to as Chewiness or Softness. The Young's Modulus is used to describe the same characteristics of both soft and hard kibble.

Split-Plate Palatability Test

Two products, A and B, are weighed into separate bowls and presented to a dog simultaneously, side-by-side. The dog is required to smell both products. The dog is then allowed to choose which food to consume. Consumption is measured after the feeding event is concluded. Consumption data are transformed to Percent Converted Intake (PCI) by the following equation:

$$PCI_A = [\text{Grams A Consumed} / \text{Grams A Consumed} + \text{Grams B Consumed})] \times 100$$

Surface Fat Measurement

In order to estimate the amount of surface fat, weighed samples of coated kibbles were mixed with hexane. The hexane was removed and the residue weighed.

Procedure

1. Weigh 10 grams of sample into a 50 mL centrifuge tube.
2. In a fume hood, add 25 mL hexane and cap the centrifuge tube.
3. Mix the sample by gently tilting it back and forth for 5 minutes.
4. Carefully pour the hexane extract into a tared centrifuge tube in the fume hood.
5. Hold the tube in a pan containing warm water (~150 °F).

6. Remove the hexane by blowing nitrogen over the surface producing a swirling motion to both minimize splatter and hasten evaporation.

7. Weigh the residue.

**Claims**

1. A food product comprising:

   a kibble;
   a first coating on the kibble, the first coating is a plasticizer; and
   a second coating on the kibble, the second coating comprising a fat;
   wherein the coated kibble has a moisture level less than 12% and wherein the plasticizer is glycerin, the first coating is applied directly on the kibble, and the second coating is applied to the first coating.
   and the first coating and the second coating are distinct coatings.

2. The food product of any of the preceding claims, wherein the first coating comprises the plasticizer in an amount greater than 1% and less than 30% by weight of the coated kibble.

3. The food product of any of the preceding claims, wherein the kibble comprises internal glycerin.

4. The food product of any of the preceding claims, wherein the total plasticizer content of the coated kibble is not greater than 30% by weight of the coated kibble.

5. The food product of any of the preceding claims, wherein the total plasticizer content of the coated kibble is not greater than 8% by weight of the coated kibble.

6. The food product of any of the preceding claims, further comprising an acid in an amount greater than 0% and less than 3% of the coated kibble.

7. The food product of Claim 8, wherein the acid is citric acid.

8. The food product of any of the preceding claims, wherein the food product does not comprise any added formic acid, acetic acid, propionic acid, butyric acid, lactic acid, sorbic acid, fumaric acid, malic acid, tartaric acid, citric acid, phosphoric acid, ascorbic acid, sulfuric acid, hydrochloric acid, or combinations thereof.

9. The food product of any of the preceding claims, further comprising a structurant.

10. The food product of claim 9 wherein the structurant is incorporated into the second coating.

11. The food product of claim 10, wherein the second coating comprises between 1% and 5% of the structurant by weight of the second coating composition.

12. The food product of claim 10 or claim 111 wherein the second coating is not an emulsion.

**Patentansprüche**

1. Nahrungsprodukt, umfassend:

   ein Trockenfutter;
   eine erste Schicht auf dem Trockenfutter, wobei die erste Schicht ein Weichmacher ist; und
   eine zweite Schicht auf dem Trockenfutter, wobei die zweite Schicht ein Fett umfasst;
   wobei das beschichtete Trockenfutter einen Feuchtigkeitsgehalt von weniger als 12% hat, und wobei der Weichmacher Glycerin ist,
   die erste Schicht direkt auf das Trockenfutter aufgetragen ist, und die zweite Schicht auf die erste Schicht aufgetragen ist,
   und die erste Schicht und die zweite Schicht getrennte Schichten sind.

**2.** Nahrungsprodukt nach einem der vorhergehenden Ansprüche, wobei die erste Schicht den Weichmacher in einer Menge von mehr als 1 Gew.% und weniger als 30 Gew.% des beschichteten Trockenfutters umfasst.

**3.** Nahrungsprodukt nach einem der vorhergehenden Ansprüche, wobei das Trockenfutter internes Glycerin umfasst.

**4.** Nahrungsprodukt nach einem der vorhergehenden Ansprüche, wobei der Gesamtgehalt an Weichmacher in dem beschichteten Trockenfuter nicht mehr als 30 Gew.% des beschichteten Trockenfutters beträgt.

**5.** Nahrungsprodukt nach einem der vorhergehenden Ansprüche, wobei der Gesamtgehalt an Weichmacher in dem beschichteten Trockenfuter nicht mehr als 8 Gew.% des beschichteten Trockenfutters beträgt.

**6.** Nahrungsprodukt nach einem der vorhergehenden Ansprüche, weiterhin umfassend eine Säure in einer Menge von mehr als 0% und weniger als 3% des beschichteten Trockenfutters.

**7.** Nahrungsprodukt nach Anspruch 8, wobei die Säure Zitronensäure ist.

**8.** Nahrungsprodukt nach einem der vorhergehenden Ansprüche, wobei das Nahrungsprodukt keine zugesetzte Ameisensäure, Essigsäure, Propionsäure, Buttersäure, Milchsäure, Sorbinsäure, Fumarsäure, Apfelsäure, Weinsäure, Zitronensäure, Phosphorsäure, Ascorbinsäure, Schwefelsäure, Salzsäure oder Kombinationen davon umfasst.

**9.** Nahrungsprodukt nach einem der vorhergehenden Ansprüche, weiterhin umfassend ein Strukturmittel.

**10.** Nahrungsprodukt nach Anspruch 9, wobei das Strukturmittel in die zweite Schicht integriert ist.

**11.** Nahrungsprodukt nach Anspruch 10, wobei die zweite Schicht zwischen 1% und 5% des Strukturmittels, bezogen auf das Gewicht der zweiten Schichtzusammensetzung, umfasst.

**12.** Nahrungsprodukt nach Anspruch 10 oder 11, wobei die zweite Schicht keine Emulsion ist.

**Revendications**

**1.** Produit alimentaire, comportant:

un aliment sec;
une première couche sur l'aliment sec, la première couche étant un plastifiant; et
une seconde couche sur l'aliment sec, la seconde couche comportant une graisse;
l'aliment sec revêtue ayant un degré d'humidité de moins de 12% et le plastifiant étant de la glycérine,
la première couche étant appliquée directement sur l'aliment sec, et la seconde couche étant appliquée sur la première couche,
et la première couche et la seconde couche étant des couches distinctes.

**2.** Produit alimentaire selon l'une quelconque des revendications précédentes, la première couche comportant le plastifiant dans une quantité supérieure à 1% et inférieure à 30% en poids de l'aliment sec revêtue.

**3.** Produit alimentaire selon l'une quelconque des revendications précédentes, l'aliment sec comportant de la glycérine interne.

**4.** Produit alimentaire selon l'une quelconque des revendications précédentes, le contenu total du plastifiant de l'aliment sec revêtue n'étant pas supérieur à 30% en poids de l'aliment sec revêtue.

**5.** Produit alimentaire selon l'une quelconque des revendications précédentes, le contenu total du plastifiant de l'aliment sec revêtue n'étant pas supérieur à 8% en poids de l'aliment sec revêtue.

**6.** Produit alimentaire selon l'une quelconque des revendications précédentes, comportant en outre un acide en une quantité supérieure à 0% et inférieure à 3% de l'aliment sec revêtue.

**7.** Produit alimentaire selon la revendication 8, l'acide étant de l'acide citrique.

**8.** Produit alimentaire selon l'une quelconque des revendications précédentes, le produit alimentaire ne comportant pas de l'acide formique, de l'acide acétique, de l'acide propionique, de l'acide butyrique, de l'acide lactique, de l'acide sorbique, de l'acide fumarique, de l'acide malique, de l'acide tartrique, de l'acide citrique, de l'acide phosphorique, de l'acide ascorbique, de l'acide sulfurique, de l'acide chlorhydrique ajoutés ou des combinaisons de ceux-ci.

**9.** Produit alimentaire selon l'une quelconque des revendications précédentes, comportant en outre un agent structurant.

**10.** Produit alimentaire selon la revendication 9, l'agent structurant étant incorporé dans la seconde couche.

**11.** Produit alimentaire selon la revendication 10, la seconde couche comportant entre 1% et 5% de l'agent structurant basé sur le poids de la composition de la seconde couche.

**12.** Produit alimentaire selon la revendication 10 ou 11, la seconde couche n'étant pas une émulsion.

FIG. 1

## REFERENCES CITED IN THE DESCRIPTION

**Non-patent literature cited in the description**

- Encyclopedia of Food Science and Technology. John Wiley & Sons, Inc, 1992, vol. 2, 794-800